# EUROPEAN PATENT APPLICATION

(11) **EP 3 564 826 A1**
(43) Date of publication of application: **06.11.2019**
(21) Application number: 18796818.5
(22) Date of filing: 02.04.2018
(51) Int. Cl.: G06F 16/00, G06F 12/02, G06F 3/06, G06F 12/0891, G06F 16/172, G06F 16/11, G06F 16/16, G06F 16/17

(54) **FILE PROCESSING METHOD AND SERVER**

(30) Priority: 19.03.2018 CN 201810226228
(71) Applicant: Wangsu Science & Technology Co., Ltd., Shanghai 200030 (CN)
(72) Inventor: DU, Jianhong, Shanghai 200030 (CN); WU, Haihua, Shanghai 200030 (CN)
(74) Representative: Hanna Moore + Curley
(86) International application number: PCT/CN2018/081556
(87) International publication number: WO 2019/178890

(57) **Abstract**

The embodiments of the present disclosure relate to the field of data processing technology, and disclose a file processing method and a server thereof. In the present disclosure, the file processing method includes a recycling process and an overwriting process, where the recycling process includes: when there is a file to be recycled on a disk, adding the to-be-recycled file into a pre-created recycle bin, to allow the to-be-recycled file to become a recycled file; and the overwriting process includes: when there is a file to be written into the disk, determining whether there is at least one recycled file in the recycle bin, when it is determined that there is at least one recycled file in the recycle bin, selecting one of the at least one recycled file from the recycle bin, and writing the to-be-written file into the selected recycled file in an overwrite manner. In the present disclosure, the application layer adopts an overwrite approach to replace the existing system recycling process, to allow reuse of the to-be-recycled files. This will effectively avoid the problem of excessive disk I/O load caused by frequent system calls during the system recycling process, thereby improving the performance of cache service.

## Description

### FIELD OF THE DISCLOSURE

The present disclosure generally relates to the field of data processing technology and, more particularly, relates to a file processing method and a server thereof.

### BACKGROUND

Caching refers to a technique for storing frequently accessed network content in a system that is closer to users and that has a faster access speed so that the speed of content access can be increased. A cache server is a server that stores frequently accessed content. With the size of network becoming larger and larger and the emerging trends in live streaming and on-demand streaming, the Internet traffic has grown geometrically. The cache server is used to deliver source station content to a node closest to a user, so that the user can obtain the desired content nearby, thereby improving the response speed and success rate of the user access.

It has been found that the existing technologies have at least the following problems: often times there is a large number of cache files on the cache server and these cache files are frequently updated. Therefore, it is necessary to frequently delete cache files or even a cache directory. In deleting the cache files, a system needs to call interfaces to recycle the disk resource. Therefore, when there are a large number of cache files to be deleted in the same period, the system recycling process may lead to high disk input and output (disk I/O) load, which affects the performance of cache service.

### BRIEF SUMMARY OF THE DISCLOSURE

The objective of the embodiments of the present disclosure is to provide a file processing method and a server thereof, in which the application layer adopts an overwrite approach to replace the existing system recycling process, to allow reuse of files that need to be recycled. This approach may effectively avoid the problem of excessive disk I/O load caused by frequent system calls during the system recycling process, thereby improving the performance of cache service.

To solve the aforementioned technical problems in the existing technologies, the embodiments of the present disclosure provide a file processing method that includes a recycling process and an overwriting process, where the recycling process includes: when there is a file to be recycled on a disk, adding the to-be-recycled file into a pre-created recycle bin, to allow the to-be-recycled file to become a recycled file; and the overwriting process includes: when there is a file to be written into the disk, determining whether there is at least one recycled file in the recycle bin, when it is determined that there is at least one recycled file in the recycle bin, selecting one of the at least one recycled file from the recycle bin, and writing the to-be-written file into the selected recycled file in an overwrite manner.

The embodiments of the present disclosure further provide a server that includes: at least one processor; at least one disk communicatively coupled to the at least one processor, where the at least one disk is used for storing files; and a memory communicatively coupled to the at least one processor, where the memory stores instructions that are executable by the at least one processor, and the instructions, when executed by the at least one processor, cause the at least one processor to implement the above-described file processing method.

The embodiments of the present disclosure further provide a computer-readable storage medium that stores a computer program that, when executed by a processor, implements the above-described file processing method.

Compared with the existing technologies, the embodiments of the present disclosure: add a to-be-recycled file into a pre-created recycle bin, to allow the to-be-recycled file to become a recycled file, when it is determined that there is a file to be written into the disk and that there is at least one recycled file in the recycle bin, select a recycled file from the recycle bin and write the to-be-written file into the selected recycled file in an overwrite manner. That is, the application layer adopts an overwrite approach to replace the existing system recycling process, to allow reuse of files that need to be recycled, thereby effectively avoiding the problem of excessive disk I/O load caused by frequent system calls during the system recycling process. Since the disk I/O load is reduced, the performance of cache service is improved.

Additionally, before selecting a recycled file from the recycle bin, the method further includes: determining whether there is at least one recycled file that satisfies preset criteria in the recycle bin, where the preset criteria include that the file size of the recycled file is less than or equal to the file size of the to-be-written file. If it is determined that there is at least one recycled file that satisfies the preset criteria, selecting a recycled file from the recycle bin, where selecting a recycled file from the recycle bin specifically includes selecting a recycled file from the at least the recycled file that satisfies the preset criteria. In the disclosed embodiments, a specific method for selecting a recycled file is provided, that requires the file size of the selected recycled file to be smaller than or equal to the file size of the to-be-written file. Therefore, the to-be-written file can completely overwrite the selected recycled file. That is, the recycled file does not have any remaining space that is not overwritten, thereby preventing an existence of any remaining space in the recycled file that may be wasted.

Additionally, selecting a recycled file from the at least one recycled file that satisfies the preset criteria specifically includes: selecting, from each recycled file that satisfies the preset criteria, a recycled file that has a file size closest to the file size of the to-be-written file. In the disclosed embodiments, the recycled files in the recycle bin may be utilized as efficiently as possible, and thus the disk usage may be reduced as much as possible.

Additionally, if it is determined that there is no recycled file that satisfies the preset criteria, or if it is determined that there is no recycled file in the recycle bin, a new file is created, and the to-be-written file is written into the created new file. Further, when it is determined that there is no recycled file that satisfies the preset criteria, before creating the new file and writing the to-be-written file into the new file, the method further includes: obtaining the current usage of the disk, and determining whether the current usage of the disk is less than a preset usage threshold; if the current usage of the disk is less than the preset usage threshold, creating a new file, and writing the to-be-written file into the new file; if the current usage of the disk is not less than the preset usage threshold, selecting a recycled file from the recycled files in the recycle bin. In the disclosed embodiments, the current usage of the disk is taken as one of the consideration factors in determining whether to overwrite a recycled file or to create a new file, which allows multiple factors to be considered for a comprehensive evaluation. By doing so, the disk usage may be reduced as much as possible when the number and frequency of the to-be-written files are relatively large or high (which means that the network traffic is often heavy).

Additionally, the recycle bin includes a plurality of buckets that are pre-created based on a bucket sorting algorithm; and adding a to-be-recycled file into the pre-created recycle bin specifically includes: calculating a file size of the to-be-recycled file using the bucket sorting algorithm, identifying a bucket corresponding to the to-be-recycled file, and adding the to-be-recycled file into the bucket corresponding to the to-be-recycled file. In the disclosed embodiments, a bucket sorting algorithm is used to specifically put a file into the recycle bin. This allows a quicker selection of a desired recycled file in the subsequent overwriting process.

Additionally, the method also includes a disk detection process. The disk detection process includes: obtaining a current total number of recycled files in the recycle bin, a current total number of to-be-deleted files in a preset deletion bin, current time, and a current usage of the disk; determining whether the disk satisfies preset disk cleanup criteria based on the current total number of recycled files in the recycle bin, the current total number of to-be-deleted files in the deletion bin, the current time, and the current usage of the disk; if the preset disk cleanup criteria are not met, setting a disk detection cycle, and performing the disk detection process according to the disk detection cycle; if the preset disk cleanup criteria are met, performing the disk cleanup, then performing the disk detection process according to the disk detection cycle. In the disclosed embodiments, a disk detection process is included, which may periodically check the disk so that the files can be regularly cleaned up to prevent the actual disk space from being inadequate.

### BRIEF DESCRIPTION OF THE DRAWINGS

The exemplary description of one or more embodiments will be made in detail with reference to the figures in the accompanying drawings. The description is provided by way of example, but not by way of limitation of the disclosed embodiments. In the drawings, like reference numbers indicate like elements. Unless otherwise stated, the figures in the drawings are not limited to the illustrated proportion.
FIG. 1 is a flowchart of a file processing method of Embodiment 1 according to some embodiments of the present disclosure;
FIG. 2 is a flowchart of a file processing method of Embodiment 2 according to some embodiments of the present disclosure;
FIG. 3 is a flowchart of a file processing method of Embodiment 3 according to some embodiments of the present disclosure;
FIG. 4 is a flowchart of a file processing method of Embodiment 4 according to some embodiments of the present disclosure;
FIG. 5 is a flowchart of a file processing method of Embodiment 5 according to some embodiments of the present disclosure;
FIG. 6 is a flowchart of a specific process of Step 509 in Embodiment 5 according to some embodiments of the present disclosure; and
FIG. 7 is a schematic diagram of a server in Embodiment 6 according to some embodiments of the present disclosure.

### DETAILED DESCRIPTION

To make the objectives, technical solutions, and advantages of the present disclosure clearer, specific embodiments of the present disclosure will be made in detail with reference to the accompanying drawings. Nonetheless, those skilled in the art will appreciate that, to provide a better understanding of the present disclosure, numerous technical details are presented in the embodiments of the present disclosure. However, even without these technical details and the modifications and variations made based on the embodiments described as follows, the technical solutions claimed in the present disclosure may still be implemented.

Embodiment 1 of the present disclosure relates to a file processing method that includes a recycling process and an overwriting process. The recycling process includes: when there is a file to be recycled on a disk, adding the to-be-recycled file into a pre-created recycle bin, to allow the to-be-recycled file to become a recycled file. The overwriting process includes: when there is a file to be written into the disk, determining whether there is at least one recycled file in the recycle bin; when it is determined that there is at least one recycled file in the recycle bin, selecting a recycled file from the recycle bin, and writing the to-be-written file to the selected recycled file in an overwrite manner.

Compared with the existing technologies, Embodiment 1 adds a to-be-recycled file into the pre-created recycle bin, to allow the to-be-recycled file to become a recycled file; when it is determined that there is a file to be written into the disk and there is at least one recycled file in the recycle bin, selects a recycled file from the recycle bin, and writes the to-be-written file into the selected recycled file in an overwrite manner. That is, the application layer adopts an overwrite approach to replace the existing system recycling process, to allow reuse of files that need to be recycled. This will effectively avoid the problem of excessive disk I/O load caused by frequent system calls during the system recycling process, thereby improving the performance of cache service.

The implementation of the file processing method of the disclosed embodiments will be made in detail hereinafter. The following implementation details are provided merely for illustrative purpose, but not as a requirement for implementing the disclosed technical solutions.

The file processing method of the disclosed embodiments is applied to a server, such as a cache server, through which a client terminal accesses a source station. In brief, a cache server sends a client terminal's access request to the source station, and receives the resource (e.g., a video file) corresponding to the access request fed back by the source station. The cache server stores the resource as a cache file on a disk within the cache server. When a client terminal within the serving region of the cache server makes an access request, the cache server may directly deliver the resource corresponding to the access request stored therein to the client terminal. It should be noted that the disclosed embodiments do not intend to limit a server to which the file processing method is applied.

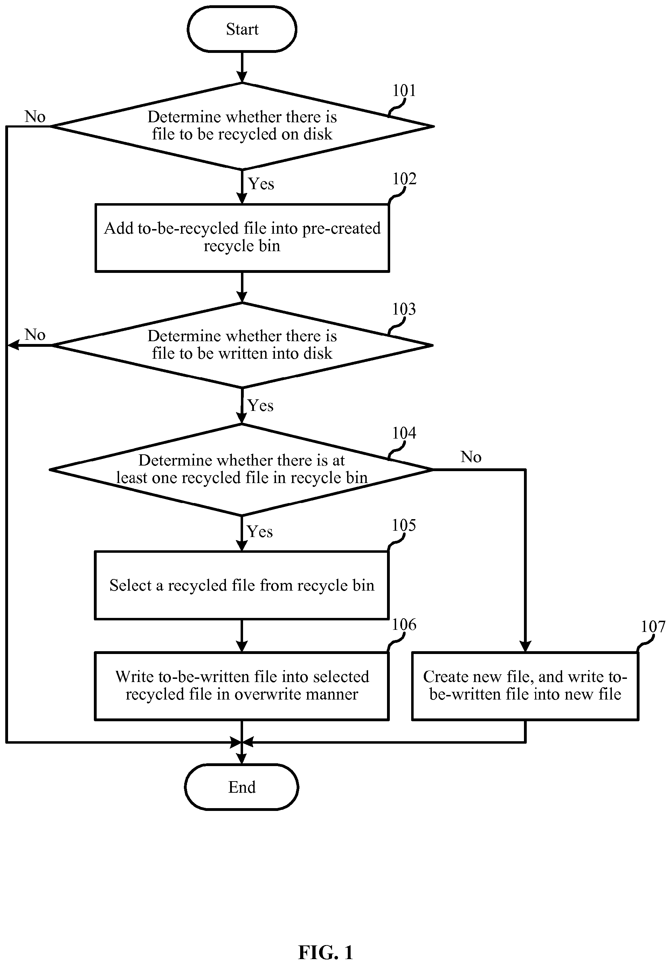

FIG. 1 is a flowchart of a file processing method of Embodiment 1 according to some embodiments of the present disclosure.

Step 101: Determine whether there is a file to be recycled on the disk; if there is a file to be recycled on the disk, proceed to Step 102; if there is no file to be recycled on the disk, the process ends.

Specifically, the cache server may periodically check whether a file stored on the disk is expired or not; if a file is expired, it is determined that the file needs to be recycled. Here, whether a file is expired or not may be determined based on factors such as the frequency of the file being accessed. The disclosed embodiments do not intend to limit specific methods for determining whether a file needs to be recycled.

Step 102: Add the to-be-recycled file into a pre-created recycle bin.

Specifically, in the disclosed embodiments, the cache server may obtain attribute information of a to-be-recycled file, and add the attribute information of the to-be-recycled file into the pre-created recycle bin. When a to-be-recycled file is added into the recycle bin, the to-be-recycled file becomes a recycled file. In the disclosed embodiments, each file has a file recycle flag bit, and the file recycle flag bit is used to indicate whether a file is recycled or not. For instance, when a file recycle flag bit is 1, it indicates that the file is recycled, and when the file recycle flag bit is 0, it means that a file is a normal file (i.e., the file is not recycled and may be accessed by the application layer). When a to-be-recycled file is added into the recycle bin, the file recycle flag bit of the to-be-recycled file is reset to 1, indicating that the to-be-recycled file has become a recycled file.

In the disclosed embodiments, the attribute information of a recycled file is configured to uniquely signify the recycled file. The attribute information of a recycled file includes at least the file size and physical location of the recycled file, and may also include the file name of the recycled file, and the like. A recycled file in the recycle bin is not accessible by the application layer, but the physical location of the recycled file on the disk does not change (that is, the same physical location as before the file is added into the recycle bin). It should be noted that, while the attribute information of a to-be-recycled file is added into the recycle bin in the disclosed embodiments, the present disclosure is not limited to these embodiments.

In one example, a data link table may be created in the recycle bin, and the attribute information of recycled files is added into the data link table (e.g., sequentially added into the data link table according to an order in which the recycled files are recycled).

The above Steps 101-102 are the recycling process for recycling the files that need to be recycled to the recycle bin.

Step 103: Determine whether there is a file to be written into the disk; if there is a file to be written into the disk, proceed to Step 104; if there is no file to be written into the disk, the process ends.

Specifically, when a terminal sends an access request to a source station through the cache server and when the resource corresponding to the access request does not exist in the cache server, the cache server sends the access request to the source station, and receives the resource corresponding to the access request fed back by the source station. The cache server will write the resource into the disk of the cache server first, then send the resource to the terminal. At this moment, the cache server recognizes that there is a file to be written into the disk. Here, the resource means the file(s) described in the disclosed embodiments.

Step 104: Determine whether there is at least one recycled file in the recycle bin. If there is at least one recycled file in the recycle bin, proceed to Step 105; if there is no recycled file in the recycle bin, proceed to Step 107.

Specifically, when there is a file to be written into the disk, the cache server will prioritize the use of recycled files in the recycle bin. When there is at least one recycled file in the recycle bin (which means that the recycle bin is not empty), the cache server selects a recycled file from the recycle bin (that is, proceed to Step 105). When there is no recycled file inside the recycle bin (that is, the recycle bin is empty), the cache server creates a new file (that is, proceed to Step 107).

Step 105: Select a recycled file from the recycle bin.

Step 106: Write the to-be-written file into the selected recycled file in an overwrite manner.

Specifically, in the disclosed embodiments, the attribute information of a recycled file includes the physical location of the recycled file. The cache server obtains the physical location of a recycled file from the attribute information of the recycled file, and writes the to-be-written file into the physical location of the selected recycled file and overwrites the original data of the recycled file. That is, the disk is being overwritten.

In the disclosed embodiments, Step 106 specifically includes: if it is determined that the file size of the selected recycled file is smaller than the file size of the to-be-written file, expanding the file size of the selected recycled file to be the same as the file size of the to-be-written file. The to-be-written file is then written into the expanded recycled file in an overwrite manner.

That is, when the file size of the selected recycled file is smaller than the file size of the to-be-written file, the file size of the selected recycled file is first expanded, to allow the file size of the selected recycled file and the file size of the to-be-written file to be the same (the expanded section is an area not used on the disk). The to-be-written file is overwritten into the expanded recycled file, where a part of the to-be-written file overwrites the recycled file, while the remaining part is written into the expanded section.

Here, after the selected recycled file is successfully overwritten (that is, new content has been written into the physical location of the recycled file), the file recycle flag bit of the selected recycled file is reset to 0, indicating that the recycled file has become a normal file (that is, the file is not recycled and is accessible by the application layer). The cache server may update the attribute information (file name, file size, physical location, etc.) of the selected recycled file according to the attribute information of the to-be-written file, and delete the attribute information of the selected recycled file from the recycle bin (that is, the recycle bin has one less recycled file, while the disk has one more file accessible by the application layer).

The above Steps 103-106 are the overwriting process for overwriting the to-be-written file into the selected recycled file.

Step 107: Create a new file and write the to-be-written file into the new file.

When there is no recycled file in the recycle bin (i.e., the recycle bin is empty), a new file is created at this point, and the to-be-written file is written into the new file.

It should be noted that the above-described recycling process (including Steps 101-102) and the overwriting process (including Steps 103-106) are two processes that may be performed in parallel without necessarily a sequential order. The specific step numbers provided above are merely for illustrative purpose.

Further, between Step 101 and Step 102, the method may further include the following steps: determining whether the file size of a recycled file meets the requirement of single-file space thresholds of the recycle bin (the single-file space thresholds may include, for example, a maximum threshold and a minimum threshold, and the file size of a recycled file falling between the maximum threshold and the minimum threshold is considered to meet the requirement). If the requirement is met, the file may be recycled (i.e., proceed to Step 102). If the requirement is not met, the file may not be recycled (e.g., the file may be directly moved into a pre-created deletion bin). Further, between Step 101 and Step 102, the method may further include: determining whether the current total number of recycled files in the recycle bin exceeds a preset total-number threshold of recycled files; if the current total number of recycled files in the recycle bin does not exceed the preset total-number threshold of recycled files, the recycling process may be performed (i.e., proceed to Step 102); if the current total number of recycled files in the recycle bin does exceed the preset total-number threshold of recycled files, the recycling process may not be performed. There is no limitation on the sequential order between determining the file size of a recycled file and determining the current total number of recycled files in the recycle bin.

Further, after the recycling process and/or the overwriting process, the method further includes: updating the attribute information of the recycle bin, where the attribute information of the recycle bin includes at least the current total number of recycled files and the total-number threshold of recycled files. Here, the attribute information of the recycle bin may also include the total file size, single-file space thresholds, and the like. Accordingly, in the aforementioned process, the single-file space thresholds and the current total number of recycled files may be obtained from the attribute information of the recycle bin for the determination process.

Here, the single-file space thresholds and the total-number threshold of recycled files of the recycle bin may be set (by the system itself or predefined by a user) when the recycle bin is initialized. Presetting the single-file space thresholds and the total-number threshold of recycled files may rule out the problem of read and write errors that may be caused by the extreme size of a recycled file or an excessive number of recycled files in the recycle bin.

Further, in the cache server, there may also include an indicating parameter to indicate whether the file-recycling function is available. A user may preset status values of the indicating parameter to indicate whether the file-recycling function is enabled or not. If the status value of the indicating parameter is determined to be "on", the file-recycling function in the cache server is enabled. This means that the cache server may perform the file processing methods as described in the embodiments of the present disclosure. That is, the recycling process and the overwriting process may be implemented when the file-recycling function is enabled. If the status value of the indicating parameter is determined to be "off, it indicates that the file-recycling function is disabled. Here, the attribute information of the recycle bin may be set when the file-recycling function is detected to be enabled (the file-recycling function may be checked while the cache server is being turned on and initialized or in real time after the cache server is turned on).

In addition, the information of the recycle bin is stored in the memory of the cache server in the disclosed embodiments. When the cache server is restarted, the recycle bin needs to be rebuilt. In one example, when the cache server is restarted, the file recycle flag bit of each file on the disk is checked. If a file recycle flag bit is 1, it indicates that the file is a recycled file, and the attribute information of that recycled file is added into the recycle bin. If a file recycle flag bit is 0, it indicates that the file is a normal file. It should be noted that the file status indicated by the different values of the file recycle flag bit is not limited by the disclosed embodiments. For example, it may also be set that the file recycle flag bit value of 1 indicates that a file is a normal file; while the file recycle flag bit value of 0 indicates that a file is a recycled file. Further, it is also possible to first determine whether the file-recycling function of the cache server is enabled. If the file-recycling function is enabled, the recycle bin is rebuilt. Additionally, before putting back a recycled file into the recycle bin, determine whether the file size of the recycled file meets the requirement of the single-file space thresholds of the recycle bin, and/or whether the current total number of recycled files in the recycle bin exceeds the preset total-number threshold of recycled files, and then determine whether to put back the recycled file into the recycle bin based on the result of the determining process.

Embodiment 2 of the present disclosure relates to a file processing method. Embodiment 2 is almost the same as Embodiment 1, and the main improvement is that Embodiment 2 of the present disclosure provides a specific method of selecting a recycled file from the recycle bin.

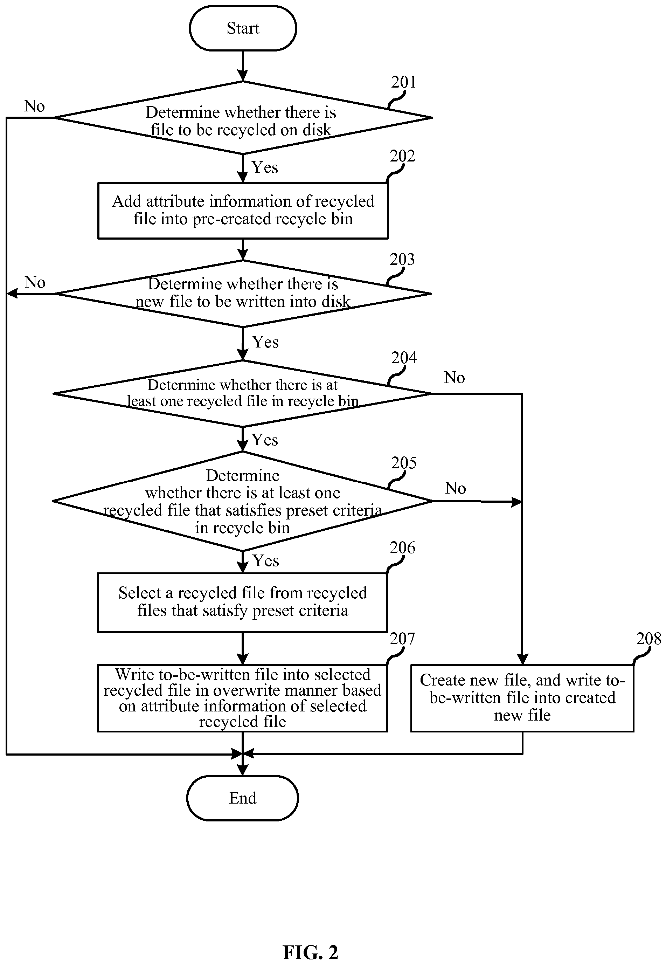

FIG. 2 is a flowchart of a file processing method of Embodiment 2 according to some embodiments of the present disclosure. In the figure, Steps 201-204 and Steps 207-208 are substantially the same as Steps 101-107 of Embodiment 1, which will not be repeated again here. The difference lies in:
Step 205: Determine whether there is at least one recycled file that satisfies the preset criteria in the recycle bin.
Step 206: Select a recycled file from the recycle bin, specifically: select a recycled file from the recycled files that satisfy the preset criteria.

Here, the preset criteria include that the file size of a recycled file is less than or equal to the file size of the to-be-written file. The cache server determines whether there is at least one recycled file, in the recycle bin, whose file size is less than or equal to the file size of the to-be-written file. If there is at least on such recycled file, select a recycled file from the recycled files that satisfy the preset criteria.

Compared with Embodiment 1, Embodiment 2 provides a specific method for selecting a recycled file. The method requires the file size of the selected recycled file is smaller than or equal to the file size of the to-be-written file. In this way, the to-be-written file may completely overwrite the selected recycled file. That is, the recycled file does not have any remaining space that is not overwritten, thereby avoiding a remaining space in the recycled file that may be wasted. When the files on the disk are cached in segments, after the to-be-written file is written into a recycled file, if there is any remaining space in the recycled file that is not overwritten, the system does not automatically recycle the remaining space. Accordingly, if the file size of the selected recycled file is larger than the file size of the to-be-written file, the remaining space in the recycled file that is not overwritten will be wasted.

Preferably, the preset criteria may include a first preset criterion and a second preset criterion. The first preset criterion is: the file size of a recycled file is equal to the file size of the to-be-written file, and the second preset criterion is: the file size of a recycled file is smaller than the file size of the to-be-written file. The cache server may first determine whether the file sizes of the recycled files satisfy the first preset criterion. If the first preset criterion is satisfied, select a recycled file from the recycled files that satisfy the first preset criterion. If the first preset criterion is not satisfied, determine whether the file sizes of the recycled files satisfy the second preset criterion. If the second preset criterion is satisfied, select a recycled file from the recycled files that satisfy the second preset criterion. If the second preset criterion is not satisfied, it means that there is no recycled file that may be reused, then proceed to Step 208. Here, when selecting a recycled file from the recycled files that satisfy the second preset criterion, the difference between the file size of the to-be-written file and the file size of each recycled file that satisfies the second preset criterion may be calculated. The recycled file corresponding to the minimum difference is selected for overwriting (i.e., the recycled file closest to the file size of the to-be-written file is selected for overwriting). This may further improve the efficiency of the utilization of recycled files in the recycle bin, and consequently, the disk usage is further reduced. Here, the expanded section described in Step 106 is the difference between the file size of the to-be-written file and the file size of the selected recycled file.

Embodiment 3 of the present disclosure relates to a file processing method. Embodiment 3 is almost the same as Embodiment 2. The main improvement is that Embodiment 3 of the present disclosure provides another specific method of selecting a recycled file from the recycle bin.

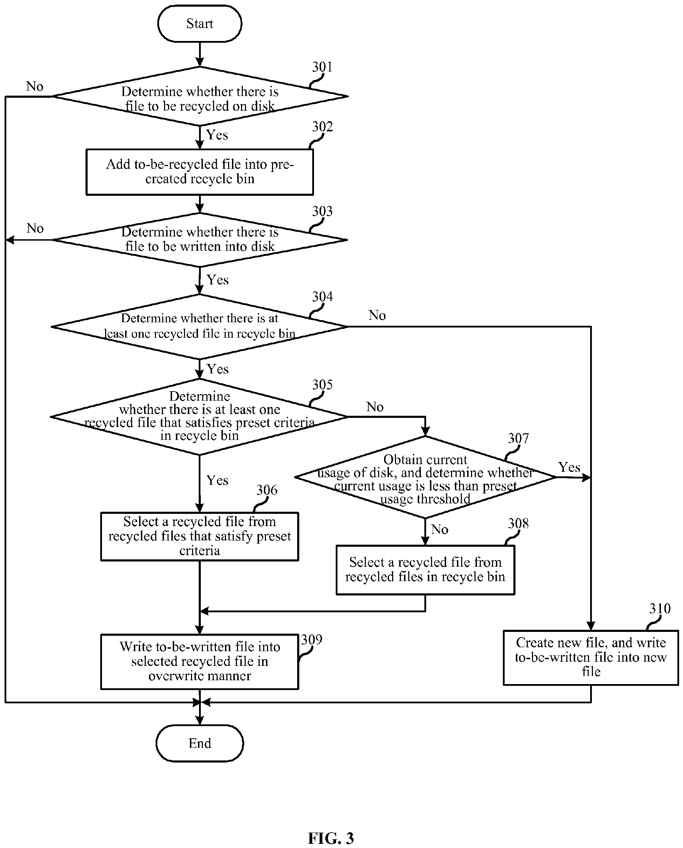

FIG. 3 is a flowchart of a file processing method of Embodiment 3 according to some embodiments of the present disclosure. In the figure, Steps 301-306 and Steps 309-310 are substantially the same as Steps 201-208 in Embodiment 2, which will not be repeated again here. The difference lies in that:
When the result of the determining process in Step 305 is "No", proceed to Step 307: obtain the current usage of the disk, and determine whether the current usage is less than a preset usage threshold; if the current usage of the disk is less than the preset usage threshold, proceed to Step 310; if the current usage of the disk is not less than the preset usage threshold, proceed to Step 308.

Step 308: Select a recycled file from the recycled files in the recycle bin; then proceed to Step 309.

In the disclosed embodiments, the current usage of the disk is: (the total file size of the files accessible by the application layer + the total file size of recycled files in the recycle bin)/total space of the disk. The cache server may regularly calculate the current usage of the disk. Here, the disk has its attribute information, and the attribute information of the disk includes at least the current usage of the disk (which may be updated in real time) and the disk usage threshold (which may be preset in advance).

When the result of the determining process in Step 305 is "No", it means that there is no recycled file that satisfies the preset criteria in the recycle bin (that is, the file size of each recycled file in the recycle bin is larger than the file size of the to-be-written file). If the current usage of the disk is lower than the disk usage threshold at this moment, it indicates that the remaining space of the disk is relatively abundant. In this case, proceed to Step 310 to create a new file. If the current usage of the disk is greater than or equal to the disk usage threshold, it means that the remaining space of the disk is really limited, and the disk load is quite full. Under this situation, proceed to Step 308, that is, select a recycled file from the recycled files that are larger than the file size of the to-be-written file for overwriting. While some space may be wasted, at least it will not increase the current usage of the disk. Here, when selecting a recycled file from the recycled files that are larger than the file size of the to-be-written file, select a recycled file whose file size is closest to that of the to-be-written file. To that end, the difference between the file size of each recycled file (i.e., the file size of each recycled file that is larger than the file size of the to-be-written file) and the file size of the to-be-written file may be calculated. The recycled file corresponding to the minimum difference is selected for overwriting, so that the waste of the disk space may be minimized.

Embodiment 4 of the present disclosure relates to a file processing method. Embodiment 4 is almost the same as Embodiment 1. The main refinement is that in Embodiment 4 of the present disclosure, a specific method for adding a recycled file into the recycle bin and selecting a recycled file from the recycle bin for overwriting is provided.

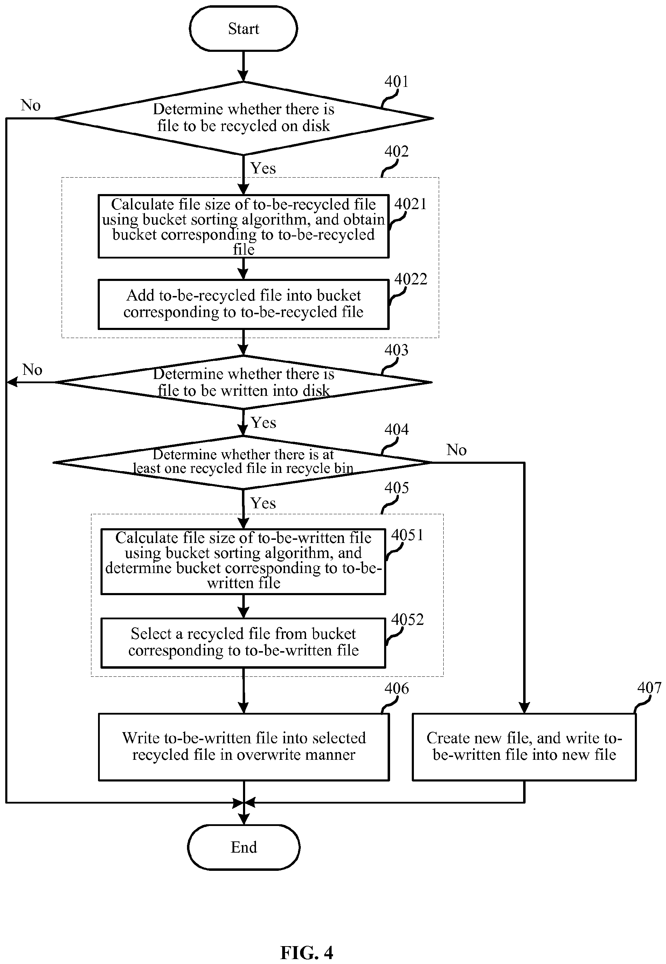

FIG. 4 is a flowchart of a file processing method of Embodiment 4 according to some embodiments of the present disclosure. In the figure, Step 401, Steps 403-404, and Steps 406-407 are substantially the same as Step 201, Steps 203-204, and Steps 206-207 in Embodiment 2, which will not be repeated again here. The difference lies in:
Step 402: Adding the to-be-recycled file into the pre-created recycle bin specifically includes:
Substep 4021: calculate the file size of the to-be-recycled file using a bucket sorting algorithm, and determine a bucket corresponding to the to-be-recycled file; and
Substep 4022: add the to-be-recycled file into the bucket corresponding to the to-the-recycled file.

Specifically, the cache server may preset the file-size thresholds of the recycled files in the recycle bin, calculate the number of buckets in the recycle bin according to a preset bucket sorting algorithm, create and initialize a file recycle link table under each bucket, configure the maximum and minimum values of the bucket index (namely the bucket serial number), the maximum file size and the maximum file number in each bucket, calculate the current file size and the current file number in each bucket, and the like, all of which may be accomplished when the recycle bin is initialized. Here, the bucket sorting algorithm may perform the calculation by using an algorithm of the store_ow_gb_get_b function, but the disclosed embodiments are not limited thereto.

Specifically, the file size of a to-be-written file is used as a parameter, and the bucket index corresponding to the to-be-written file is calculated by using the preset bucket sorting algorithm, and then the attribute information of the to-be-recycled file is added into the bucket corresponding to the bucket index. After the to-be-recycled file is added into that bucket in the recycle bin, the to-be-recycled file becomes a recycled file (the recycled file cannot be accessed by the application layer).

Here, in an example of Embodiment 1, when the server is restarted and the recycle bin needs to be rebuilt, the bucket sorting algorithm described in Step 402 may also be used when a recycled file is put back into the recycle bin.

Step 405: Selecting a recycled file from the recycle bin specifically includes:
Substep 4051: calculate the file size of the to-be-written file by using the bucket sorting algorithm, and obtain a bucket corresponding to the to-be-written file; and
Substep 4052: select a recycled file from the bucket corresponding to the to-be-written file.

By using the bucket sorting algorithm to recycle files, the recycled files in the recycle bin may be arranged according to the size of the file sizes. Correspondingly, by using the same bucket sorting algorithm to select an appropriate recycled file for overwriting, a recycled file may be selected more quickly in the subsequent overwriting process. In other words, since each bucket is organized in a predefined order (in an order from small to large, or from large to small, according to the size(s) of an accommodated single file(s) in each bucket), the subsequent search for a desired recycled file for overwriting may be relatively quick. It should be noted that, in the disclosed embodiments, while the bucket sorting algorithm is applied in both the recycling process and the overwriting process, the disclosed embodiments are not limited thereto. Even if only the recycling process uses the bucket sorting algorithm (while the overwriting process uses a sequential comparison method), the speed of selecting a recycled file may also be improved to some extent.

It should be noted that Embodiment 4 may be also an improvement made on the basis of Embodiment 1 or Embodiment 3.

Embodiment 5 of the present disclosure relates to a file processing method. Embodiment 5 is almost the same as Embodiment 1, and the main difference is that in Embodiment 5 of the present disclosure, the method further includes a disk detection process.

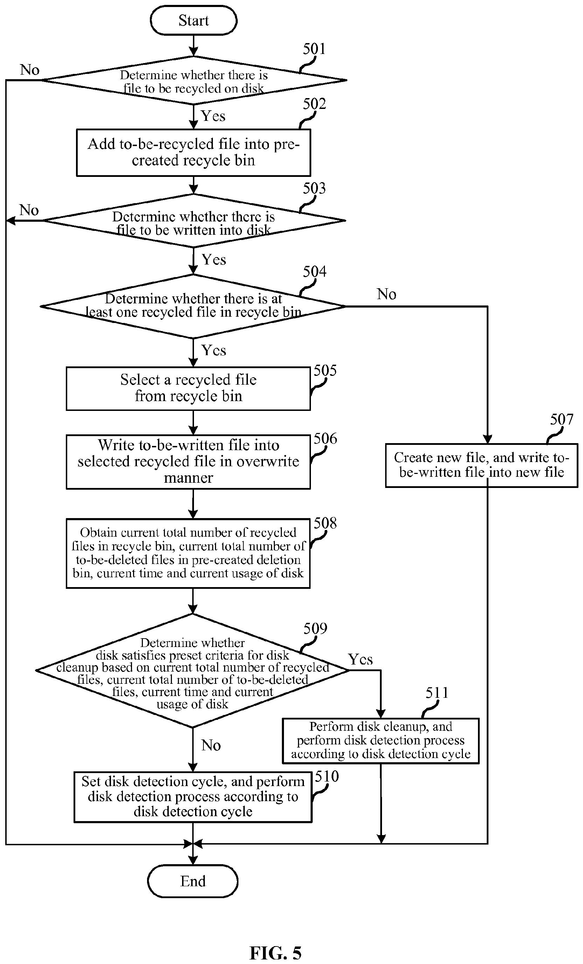

FIG. 5 is a flowchart of a file processing method of Embodiment 5 according to some embodiments of the present disclosure. In the figure, Steps 501-507 are substantially the same as Steps 101-107 in Embodiment 1, which will not be repeated again here. The difference lies in that an additional disk detection process is included in Embodiment 5. The disk detection process specifically includes:
Step 508: Obtain a current total number of files in the recycle bin, a current total number of to-be-deleted files in a preset deletion bin, current time, and a current usage of the disk.

In the disclosed embodiments, a deletion bin is preset in the cache server, and the deletion bin is used for storing the files to be deleted. Specifically, in order to reduce the disk I/O during peak hours, the cache server adopts an asynchronous deletion mechanism. That is, a time period in which the network traffic is relatively low in a day is selected as a disk cleanup period (for example, an early morning period, during which the network access traffic is relatively low), and the deletion of the cached files is performed mainly in this cleanup period. In a non-cleanup period (i.e., a period other than the above cleanup period in a day), if a file that needs to be deleted is detected and the disk is in a healthy state (i.e., the current usage of the disk is less than the preset disk usage threshold), the file that needs to be deleted may be moved into the deletion bin in advance, to allow the file to be deleted until it is a cleanup period. Here, a file moved into the deletion bin is a to-be-deleted file, which is not accessible by the application layer. In addition, a to-be-deleted file may be uniquely signified by the attribute information of the to-be-deleted file, and the attribute information of the to-be-deleted file will be put into the deletion bin. It should be noted that the above-described application scenario may be also applicable to the file processing methods disclosed in Embodiments 1-4. In particular, when the cache server adopts the asynchronous deletion mechanism, the disk I/O load in the cleanup period is relatively high (because a large number of files are being deleted in the same period of time). The file processing methods of the embodiments of the present disclosure may effectively reduce the number of files to be deleted in the deletion bin, thereby effectively reducing the disk I/O load during the cleanup period and improving the performance of cache service during the cleanup period.

Step 509: Determine whether the disk satisfies preset disk cleanup criteria based on the current total number of recycled files, the current total number of to-be-deleted files, the current time, and the current usage of the disk; if the disk does not satisfy the preset disk cleanup criteria, proceed to Step 510; if the disk satisfies the preset disk cleanup criteria, proceed to Step 511.

Step 510: Set a disk detection cycle and perform the disk detection process according to the disk detection cycle, that is, set a disk detection cycle and restart the disk detection process after one disk detection cycle.

Step 511: Perform the disk cleanup; then perform the disk detection process according to the disk detection cycle, that is, set a disk detection cycle and restart the disk detection process after one disk detection cycle.

In the disclosed embodiments, the disk cleanup criteria include:
Criterion (1): the current time falls into the cleanup period, and the current total number of to-be-deleted files is not zero; or,
Criterion (2): the current time does not fall into the cleanup period, and the current usage of the disk is greater than or equal to the disk usage threshold, and the current total number of to-be-deleted files is not zero; or,
Criterion (3): the current time does not fall into the cleanup period, the current total number of recycled files is greater than or equal to the total-number threshold of recycled files, and the current total number of to-be-deleted files is not zero.

The disclosed embodiments are not limited to the above-described disk cleanup criteria. Those skilled in the art may configure other settings as needed.

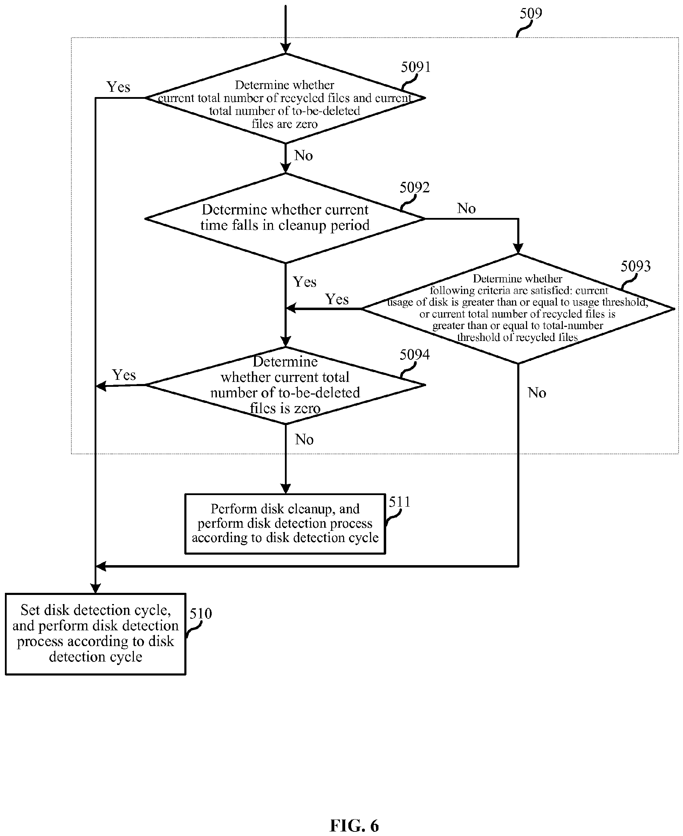

In one example, as shown in FIG. 6, Step 509 may include the following substeps:
Substep 5091: Determine whether the current total number of recycled files and the current total number of to-be-deleted files are both zero; if the current total number of recycled files and the current total number of to-be-deleted files are both zero, proceed to Step 510; if the current total number of recycled files and the current total number of to-be-deleted files are not both zero, proceed to Substep 5092.
Substep 5092: Determine whether the current time falls into the cleanup period; if the current time does not fall into the cleanup period, proceed to Substep 5093; if the current time falls into the cleanup period, proceed to Substep 5094.
Substep 5093: Determine whether the following criteria are satisfied: the current usage of the disk is greater than or equal to the usage threshold, or the current total number of recycled files is greater than or equal to the total-number threshold of recycled files; if the criteria are satisfied, proceed to Step 5094; if the criteria are not satisfied, proceed to Step 510.
Substep 5094: Determine whether the current total number of to-be-deleted files is zero; if the current total number of to-be-deleted files is zero, proceed to Step 510; if the current total number of to-be-deleted files is not zero, proceed to Step 511.

It should be noted that, when the current total number of recycled files is greater than or equal to the total-number threshold of recycled files and when the application layer detects that there is a to-be-recycled file, the application layer may not move the file into the recycle bin. In this situation, the file is directly moved into the deletion bin. Therefore, when the above Criterion (3) is satisfied, the file deleted in Step 511 may be an original to-be-deleted file in the deletion bin (that has been moved from the recycle bin) or a to-be-deleted file directly put into the deletion bin by the application layer.

Preferably, when setting the disk detection cycle in Step 510, the disk detection cycle may be set to different values based on the different states of the disk. For instance,
State (1): when the current total number of recycled files and the current total number of to-be-deleted files are both zero (that is, the result of the determining process in Substep 5091 is "Yes"), the disk detection cycle may be set to be relatively large, for example, 10 seconds;
State (2): when the current usage of the disk is less than the disk usage threshold (that is, disk is healthy) in the non-cleanup period and the current total number of recycled files is less than the total-number threshold of recycled files, the disk detection cycle may be set to be relatively small, for example, 5 seconds.

The above states and the values set for the corresponding disk detection cycles are provided by way of example in the disclosed embodiments, but not by way of limitation. Those skilled in the art may configure other settings as needed.

Further, when cleaning-up the disk, the disk detection cycle may be updated according to the statuses of the to-be-deleted files. To that end, Step 511 may specifically include: determine whether the current total number of to-be-deleted files and the current total file size satisfy preset criteria for disk detection cycle updating; if the current total number of to-be-deleted files and the current total file size satisfy the preset criteria of detection cycle updating, update the disk detection cycle, and perform the disk detection process according to the updated disk detection cycle after the cleanup is completed; if the current total number of to-be-deleted files and the current total file size do not satisfy the preset criteria of disk detection cycle updating, perform the disk detection process according to the disk detection cycle ("not updated") after the cleanup is completed.

Here, the criteria of disk detection cycle updating include that the current total file size of to-be-deleted files is greater than a preset file-size threshold in a single cleanup, or the current total number of to-be-deleted files is greater than a preset file-total number threshold in a single cleanup. That is, when the criteria of disk detection cycle updating are satisfied, it means that not all of the to-be-deleted files in the deletion bin can be cleaned-up in a single disk cleanup, and the disk status needs to be checked again as soon as possible after the disk cleanup is completed.

Preferably, when updating the disk detection cycle, the disk detection cycle may be updated to different values according to different conditions. For example, if the current total file size of to-be-deleted files is greater than the preset file-size threshold in a single cleanup, the disk detection cycle may be updated to a relatively small value, for example, 2 seconds. If the current total number of to-be-deleted files is greater than a preset file-total number threshold in a single cleanup, the disk detection cycle may be updated to an even smaller value, for example, 1 second.

In the disclosed embodiments, the criteria for updating the disk detection cycle and the updated values of the disk detection cycle are provided by way of example, but not by way of limitation. Those skilled in the art may configure other settings as needed.

Here, the disk detection process, the recycling process, and the overwriting process may be performed in parallel. The step numbers in the figures are provided by way of example, but not by way of limitation of the order of the processes/steps. The disk detection process may be configured to start to execute when the file-recycling function is initialized.

It should be noted that Embodiment 5 may also be an improvement made on the basis of Embodiment 2, Embodiment 3, or Embodiment 4.

The steps of the foregoing methods are divided for the clarification purpose. In the actual implementations, some steps may be combined into one step, or a single step may be further split into multiple steps. As long as the same logical relationship remains, these variations or modifications still fall within the protection scope of the present disclosure. Incorporating insignificant modifications to an algorithm/a process or introducing an insignificant design without changing the core design of an algorithm/a process may also fall within the protection scope of the present disclosure.

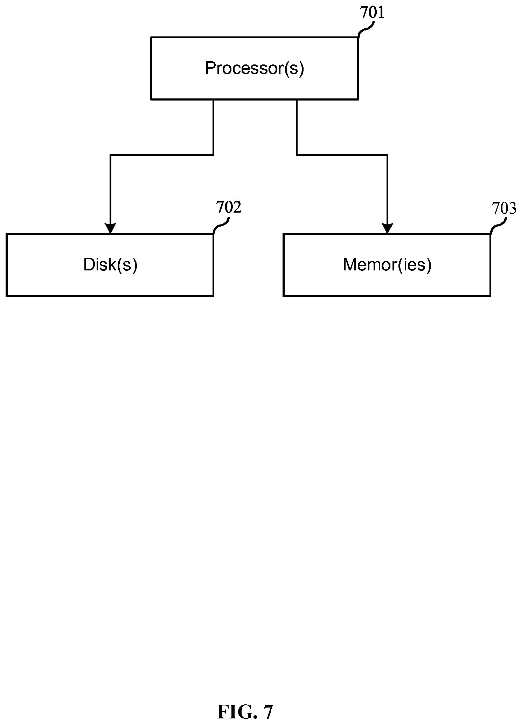

Embodiment 6 of the present disclosure relates to a server, as shown in FIG. 7, that comprises:
at least one processor 701;
at least one disk 702 communicatively coupled to the at least one processor, where the at least one disk is for storing files; and
a memory 703 communicatively coupled to the at least one processor; where:
   the memory store instructions that may be executed by the at least one processor, and the instructions, when executed by the at least one processor, cause the at least one processor to perform the file processing methods of any of the above disclosed embodiments.

Here, the memory and the at least one processor are connected by a bus. The bus may include any number of interconnected buses and bridges that connect various circuits of the one or more processors and memories. The bus may also connect various other circuits such as peripherals, voltage regulator, and power management circuit, and the like, which are well known in the art and thus will not be further described again here. A bus interface provides an interface between the bus and a transceiver. A transceiver may be one component or multiple components, such as multiple receivers and transmitters that provide means for communicating with various other devices on a transmission medium. The data processed by a processor(s) may be transmitted over the wireless medium via an antenna. Further, the antenna also receives the data and transmits the data to the processor(s).

The processor(s) is responsible for managing the bus and ordinary processing, and for providing various functions including timing, peripheral interfaces, voltage regulation, power management, and other control functions. The memor(ies) may be used to store the data that the processor(s) uses when performing certain operations.

Embodiment 7 of the present disclosure relates to a computer-readable storage medium storing a computer program. The computer program, when executed by a processor, implements the methods of the foregoing embodiments.

Those skilled in the art will appreciate that all or part of the steps of the methods of the foregoing embodiments may be implemented by relevant hardware instructed by a program. The program is stored in a storage medium and includes a plurality of instructions that are configured to cause a device (which may be a microcontroller, a chip, etc.) or a processor to perform all or part of the steps of the methods described in the various embodiments of the present disclosure. The storage medium includes a flash drive, a portable hard drive, a read-only memory (ROM), a random access memory (RAM), a magnetic disk, or an optical disk, etc., that may store program code.

Those skilled in the art will also appreciate that the foregoing embodiments are specific embodiments of the present disclosure. In real applications, various modifications and variations may be made to these embodiments without departing from the spirit and scope of the present disclosure.

## Claims

1. A file processing method, comprising a recycling process and an overwriting process, wherein:
the recycling process includes:
when there is a file to be recycled on a disk, adding the to-be-recycled file into a pre-created recycle bin, to allow the to-be-recycled file to become a recycled file; and
the overwriting process includes:
when there is a file to be written into the disk, determining whether there is at least one recycled file in the recycle bin,
when it is determined that there is at least one recycled file in the recycle bin, selecting one of the at least one recycled file from the recycle bin, and
writing the to-be-written file into the selected recycled file in an overwrite manner.

2. The file processing method according to claim 1, before selecting one of the at least one recycled file from the recycle bin, the method further includes:
determining whether there are one or more recycled files in the recycle bin that satisfy preset criteria, wherein the preset criteria include that a file size of a recycled file of the one or more recycled files is less than or equal to a file size of the to-be-written file; and
if it is determined that there are one or more recycled files that satisfy the preset criteria, selecting one of the at least one recycled file from the recycle bin, wherein selecting one of the at least one recycled file from the recycle bin further includes selecting one of the at least one recycled file from the one or more recycled files that satisfy the preset criteria.

3. The file processing method according to claim 2, wherein selecting one of the at least one recycled file from the one or more recycled files that satisfy preset criteria specifically includes:
selecting a recycled file that is closest to the file size of the to-be-written file from the one or more recycled files that satisfy the preset criteria.

4. The file processing method according to claim 2, further comprising:
if it is determined that there is no recycled file that satisfies the preset criteria or if it is determined that there is no recycled file in the recycle bin, creating a new file, and writing the to-be-written file into the new file.

5. The file processing method according to claim 4, when it is determined that there is no recycled file that satisfies the preset criteria and before creating the new file and writing the to-be-written file into the new file, the method further includes:
obtaining a current usage of the disk, and determining whether the current usage of the disk is less than a preset usage threshold;
if the current usage of the disk is less than the preset usage threshold, creating the new file and writing the to-be-written file into the new file; and
if the current usage of the disk is not less than the preset usage threshold, selecting a recycled file from the at least one recycled file in the recycle bin.

6. The file processing method according to claim 1, wherein the recycle bin includes a plurality of buckets pre-created based on a bucket sorting algorithm, and adding the to-be-recycled file into the pre-created recycle bin further includes:
calculating a file size of the to-be-recycled file using the bucket sorting algorithm, and identifying a bucket corresponding to the to-be-recycled file; and
adding the to-be-recycled file into the bucket corresponding to the to-be-recycled file.

7. The file processing method according to claim 1, wherein writing the to-be-written file into the selected recycled file in an overwrite manner specifically includes:
if it is determined that a file size of the selected recycled file is smaller than a file size of the to-be-written file, expanding the file size of the selected recycled file to be the same as the file size of the to-be-written file; and
writing the to-be-written file into the expanded recycled file in the overwriting manner.

8. The file processing method according to claim 1, further comprising a disk detection process, wherein the disk detection process includes:
obtaining a current total number of recycled files in the recycle bin, a current total number of to-be-deleted files in a preset deletion bin, current time, and a current usage of the disk;
determining whether the disk satisfies preset disk cleanup criteria based on the current total number of recycled files in the recycle bin, the current total number of to-be-deleted files in the deletion bin, the current time, and the current usage of the disk;
if the preset disk cleanup criteria are not satisfied, setting a disk detection cycle, and performing the disk detection process according to the disk detection cycle; and
if the preset disk cleanup criteria are satisfied, performing a disk cleanup, and performing the disk detection process according to the disk detection cycle.

9. The file processing method according to claim 8, wherein the disk cleanup criteria include that:
the current time falls in a preset cleanup period, and the current total number of to-be-deleted files is not zero;
the current time does not fall in the cleanup period, the current usage of the disk is greater than or equal to a preset usage threshold, and the current total number of to-be-deleted files is not zero; or
the current time does not fall in the cleanup period, the current total number of recycled files is greater than or equal to a preset total-number threshold of recycled files, and the current total number of to-be-deleted files is not zero.

10. The file processing method according to claim 8, if the preset disk cleanup criteria are satisfied, before performing the disk cleanup, the method further includes:
determining whether the current total number of to-be-deleted files and current total file size of to-be-deleted files satisfy preset detection cycle-updating criteria;
if the current total number of to-be-deleted files and the current total file size of to-be-deleted files satisfy the preset detection cycle-updating criteria, updating the disk detection cycle, and performing the disk detection process according to the updated disk detection cycle after the disk cleanup is completed; and
if the current total number of to-be-deleted files and the current total file size of to-be-deleted files do not satisfy the preset detection cycle-updating criteria, performing the disk detection process according to the disk detection cycle after the disk cleanup is completed.

11. The file processing method according to claim 10, wherein the detection cycle-updating criteria include:
the current total file size of to-be-deleted files is greater than a preset file size threshold in a single cleanup; or
the current total number of to-be-deleted files is greater than a preset file total-number threshold in a single cleanup.

12. The file processing method according to any one of claims 1-11, after the recycling process and/or the overwriting process, the method further includes:
updating attribute information of the recycle bin, wherein the attribute information of the recycle bin includes at least the current total number of recycled files and the total-number threshold of recycled files.

13. A server, comprising:
at least one processor;
at least one disk communicatively coupled to the at least one processor, wherein the at least one disk is used for storing files; and
a memory communicatively coupled to the at least one processor, wherein the memory stores instructions that are executable by the at least one processor, and the instructions, when executed by the at least one processor, cause the at least one processor to implement a file processing method according to any one of claims 1-12.

14. A computer-readable storage medium, the computer-readable storage medium storing a computer program that, when executed by a processor, implements a file processing method according to any one of claims 1-12.
